# EUROPEAN PATENT SPECIFICATION

(11) **EP 3 751 490 B1**
(45) Date of publication and mention of the grant of the patent: **08.03.2023**
(21) Application number: 20179724.8
(22) Date of filing: 12.06.2020
(51) Int. Cl.: G06Q 20/38, G06Q 20/32, G06Q 20/34, G06Q 20/36, G07F 19/00

(54) **REMOTE KEY INJECTION FOR PAYMENT TERMINALS**
FERNSCHLÜSSELINJEKTION FÜR ZAHLUNGSENDGERÄTE
INJECTION DE CLÉ À DISTANCE POUR DES TERMINAUX DE PAIEMENT

(30) Priority: 12.06.2019 US 201916438464
(43) Date of publication of application: 16.12.2020
(73) Proprietor: Visa International Service Association, San Francisco, CA 94128-8999 (US)
(72) Inventor: BANSAL, Naman, San Francisco, CA California 94128 (US); TANEJA, Pankaj, San Francisco, CA California 94128 (US)
(74) Representative: EIP

(56) References cited:
- EP-A1- 2 933 768
- EP-A1- 2 996 079
- US-A1- 2015 199 682
- US-A1- 2018 211 251

## Description

### Technical Field

Embodiments discussed herein generally relate to remotely injecting encryption resources to payment terminals.

### Background

EP 2 933 768 A1, US 2015/199682 A1 and EP 2 996 079 A1 represent relevant prior art to the claimed invention.

Payment terminals receive payment information for a transaction and confirm whether the transaction is successful. They are used throughout the world in a range of different establishments, so it is important to ensure they are configured correctly so as to prevent attacks or hacks.

Existing setup of a payment terminal is cumbersome. It starts with, once a new payment terminal is manufactured, sharing of a shared key between the terminal manufacturer and a payment gateway provider. The shared key is first generated or initiated from a Base Derivation Key (BDK). Before the shared key is injected or entered into the terminal, the shared key is sent via physical mailing addresses to the key custodians where each key custodian only receives a portion of the key. The mailing addresses are different. Once the custodians receive all pieces of the shared key, the key is manually injected, sometimes along with a key serial number, into the payment terminal.

Once the terminal receives such key initiated by the BDK, an algorithm known as Derived Key Per Transaction (DUKPT) algorithm that generates a pool of encryption keys and encrypts the User Personal data (e.g., CARD DATA) with one of the encrypted keys before sending it to payment gateways. A new, non-reusable key is generated for each transaction and cannot lead back to the original base key.

This long manual process involving multiple parties to inject keys to encrypt payment data originating from payment terminals is time-consuming to say the least. Moreover, the process involves significant costs and delays for all parties as well.

Aspects of the invention attempt to address the deficiencies of the existing approaches.

### Summary

The invention is defined by the subject matter of the appended independent claims 1, 7 and 14. Embodiments of the invention adopt a remote approach to initializing payment terminals. In one embodiment, a database of all the keys for vendors is maintained, and respective keys are injected into respective payment terminals to initialize the terminals without jeopardizing the security of the devices.

### Brief description of the drawings

Persons of ordinary skill in the art may appreciate that elements in the figures are illustrated for simplicity and clarity so not all connections and options have been shown. For example, common but well-understood elements that are useful or necessary in a commercially feasible embodiment may often not be depicted in order to facilitate a less obstructed view of these various embodiments of the present disclosure. It will be further appreciated that certain actions and/or steps may be described or depicted in a particular order of occurrence while those skilled in the art will understand that such specificity with respect to sequence is not actually required. It will also be understood that the terms and expressions used herein may be defined with respect to their corresponding respective areas of inquiry and study except where specific meanings have otherwise been set forth herein.
FIG. 1 is a system diagram for remotely initializing a payment terminal according to one embodiment.
FIG. 2 is a diagram illustrating a data structure in a database maintaining keys for the payment terminal according to one embodiment illustrated in FIG. 1.
FIGS. 3A to 3B are diagrams illustrating a set of GUI for managing remote initiation of a payment terminal according to one embodiment.
FIG. 4 is a flowchart illustrating a computerized method according to one embodiment.
FIG. 5 is a diagram illustrating a portable computing device according to one embodiment.
FIG. 6 is a diagram illustrating a remote computing device according to one embodiment.

### Detailed Description

Embodiments may now be described more fully with reference to the accompanying drawings, which form a part hereof, and which show, by way of illustration, specific exemplary embodiments may be practiced. These illustrations and exemplary embodiments may be presented with the understanding that the present disclosure is an exemplification of the principles of one or more embodiments and may not be intended to limit any one of the embodiments illustrated. Embodiments may be embodied in many different forms and should not be construed as limited to the embodiments set forth herein; rather, these embodiments are provided so that this disclosure will be thorough and complete, and will fully convey the scope of embodiments to those skilled in the art. Among other things, the present invention may be embodied as methods, systems, computer readable media, apparatuses, or devices. Accordingly, the present invention may take the form of an entirely hardware embodiment, an entirely software embodiment, or an embodiment combining software and hardware aspects. The following detailed description may, therefore, not to be taken in a limiting sense.

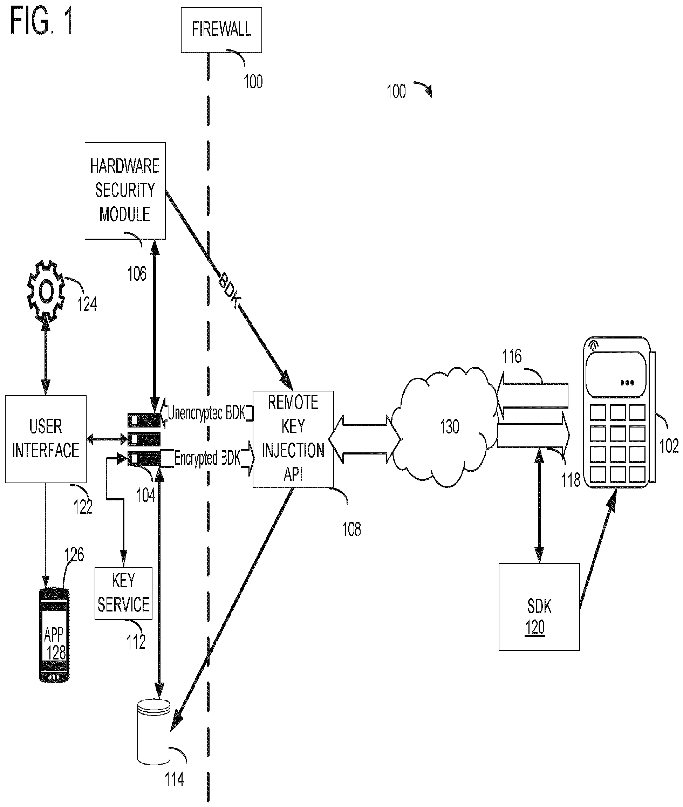

Referring to FIG. 1, a system 100 for remotely initiating a payment terminal 102 is shown. In one example, the payment terminal 102 may be a new payment device that has not been securely authenticated to handle payment transactions. For example, the payment terminal 102 may be a newly manufactured device from a manufacturer. In another example, the payment terminal 102 may be a new model of a payment terminal that has gone through testing and is waiting to be certified or authenticated.

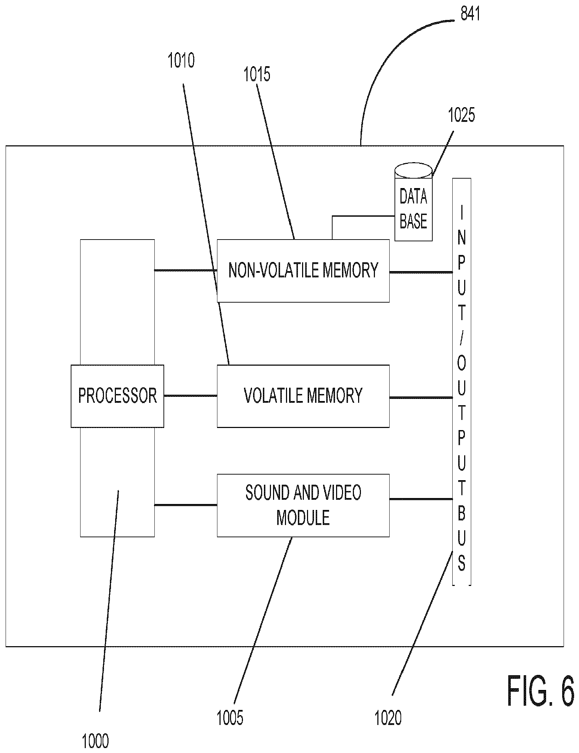

The system 100 may enable remote initiation of the payment terminals without resorting to the mundane, time-consuming and error-prone process of physically mailing a portion of the initiation security key to the payment terminal 102. In one example, the system 100 includes a server 104 for managing the overall process. For example, the server 104, as disclosed in FIG. 6, may be a distributed server system that has many individual server devices or computers across various geographical areas. The server 104 may further be connected via wired or wireless networks to a hardware security module (HSM) 106. In one example, the server 104 may be configured by computer-executable instructions to execute and process instructions such as to delegate certain tasks to the HSM 106 as the HSM 106 may be a dedicated hardware device for certain tasks. For example, the HSM 106 may be delegated to perform an initial task of sending a Base Derivation Key (BDK) to a remote key injection application programming interface (API) 108. In one embodiment, the BDK sent by the HSM 106 may not be encrypted. In another embodiment, the server 104 and the HSM 106 may be configured to be within a firewall 110 while the API 108 may be configured to be outside the firewall 110.

In another embodiment, the API 108 may be configured to embed BDK in a specific API format before forwarding it from outside the firewall 110 to a key service 112 via the server 104. For example, the key service 112 may be a computer or a plurality of computers that is configured to execute computer-executable instructions to generate encryption keys, such as encrypted BDK. The key service 112 may be configured to execute computer-executable instructions that are embodied in a function that is based on elliptic curve cryptography, such as Elliptic-curve Diffie-Hellman (ECDH) key generation. The key service 112 may receive the BDK via the API 108 and the BDK is input into the key service 112 to generate an encrypted BDK.

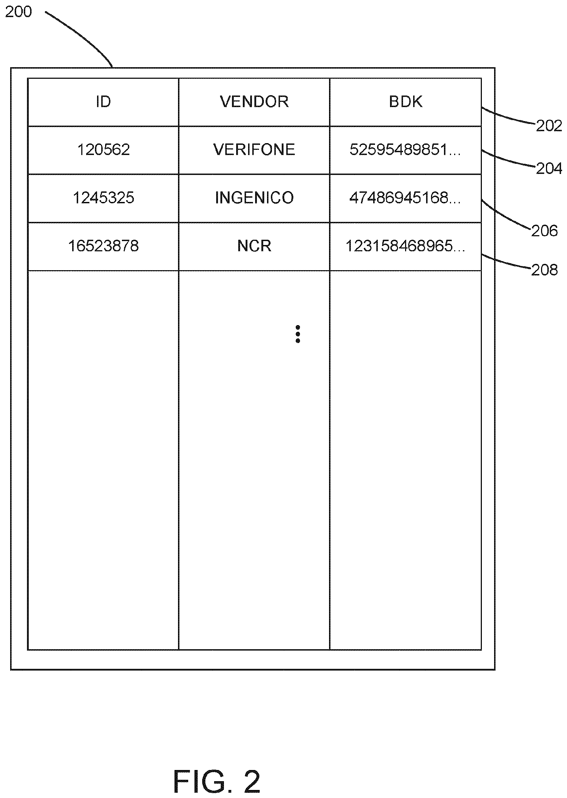

In another embodiment, the API 108 may additionally cause the encrypted BDK to be stored in a database 114, which may also be connected or coupled to the server 104. In one example, the database 114 and the key service 112, similar to the HSM 106, may be configured behind the firewall 110 of the server 104. In another embodiment, the database 114 may be configured to store the encrypted BDK in a table, for example, such as a table 200 in FIG. 2. For example, the table 200 may include columns and rows having data entries. For example, a row 202 may include field for an ID (e.g., identification number for vendor), a vendor (e.g., vendor name or label), and/or a BDK (e.g., for encrypted BDK). The BDK field may be masked or truncated and the full set of information upon clicking the field. For example, FIG. 2 illustrates rows 204, 206, 208 showing examples of the entries into the fields of the table 200.

Referring back to FIG. 1, once the encrypted BDK is accessible, either via the API 108 and/or stored in the database 114, the server 104 may be considered to be ready for receiving requests from entities such as manufacturers who may wish to activate or initialize the new payment terminal 102. Generation of the BDK by the HSM 106 may be done periodically. Alternatively, the manufacturer may have a defined production schedule for new payment terminals so the generation of the BDK may coincide with such a schedule. In a further embodiment, a specific communication may be sent to the server 104 to request a new set of BDK for initializing a payment terminal 102. Moreover, the initialization or activation of the payment terminal 102 may be a one-time event or one-time activation. As the terminal 102 may include specific derivation algorithms to generate keys for each transaction, even if eavesdroppers who steal a transaction key and try to identify the initial BDK, the terminal 102 may not be easily compromised as a new transaction key is generated from the initial BDK.

In one example, the terminal 102 may transmit a request 116 to the API 108 to obtain the encrypted BDK via computer networks 130, such as the Internet. The server 104 may configure the API 108 to respond with a response 118 with the encrypted BDK after reviewing the database entries stored in the database 114 (e.g., table 200). In one embodiment, a software development kit (SDK) service 120 may be further include a decryption kit or a decryption software package used by the manufacturer to decrypt the encrypted BDK.

Once decrypted, the terminal 102 may receive the decrypted BDK for initialization or activation, meaning that it may be used to generate a pool of transaction keys for future transactions. In another embodiment, the SDK service 120 may provide an acknowledgement of receipt from the server 104 that the encrypted BDK is received or processed by the terminal 102.

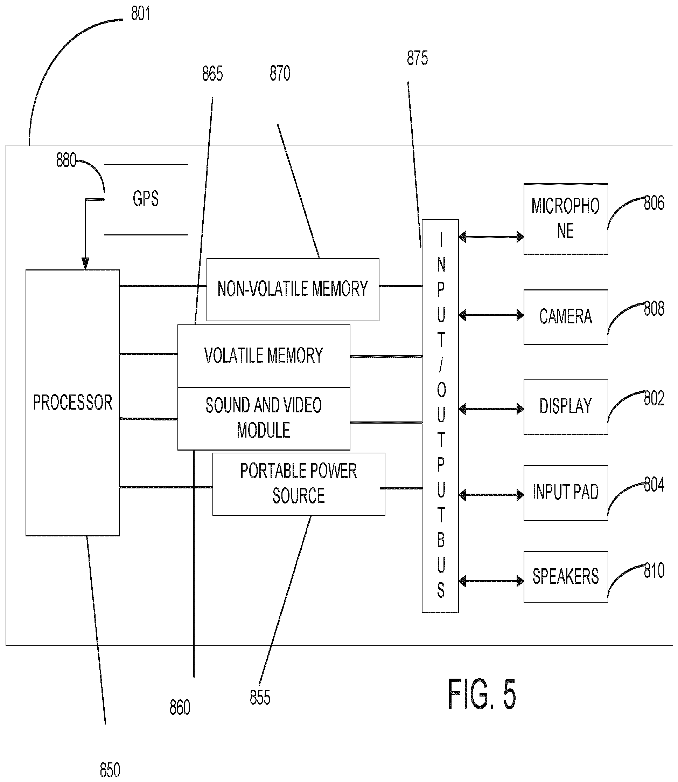

The server 104 may provide a user interface portal 122 for users or administrators. For example, the portal 122 may provide access to administrators at the manufacturer to make request or view initialization or activation status or even status of the server 104. In another embodiment, the portal 122 may provide a configuration 124 for the users to configure settings associated with the portal 122. In a further example, the portal 122 may further be configured to be coupled with a mobile device 126, such as the one discussed in FIG. 5, such as having an app 128 to access the portal 122 in a more convenient manner on the mobile device 126.

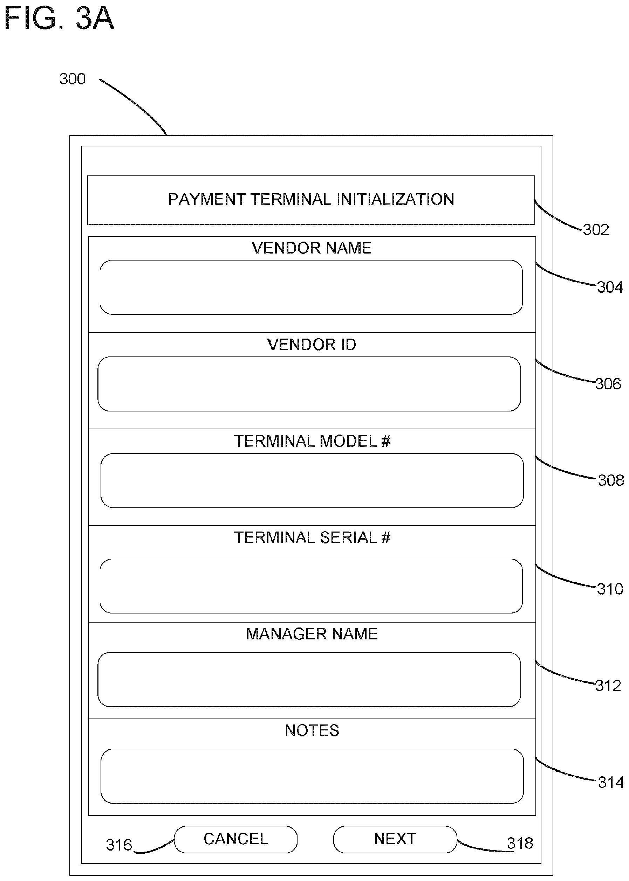

Referring now to FIG. 3A, a screenshot 300 illustrating of the portal 122 as rendered on the mobile device 126 according to one embodiment. The screenshot 300 may display a title bar 302 indicating the scope of the fields therein for activating or initialization of a payment terminal, such as the terminal 102. In one example, the fields may include: a vendor name field 304, a vendor ID field 306, a terminal model number field 308, a terminal serial number field 310, a manager name field 312, and a notes field 314. It is to be understood that this is a non-exhaustive list and that other fields may be used.

In another embodiment, the screenshot 300 may provide a next button 318 to proceed to a next screen or a cancel button to cancel 316 the request.

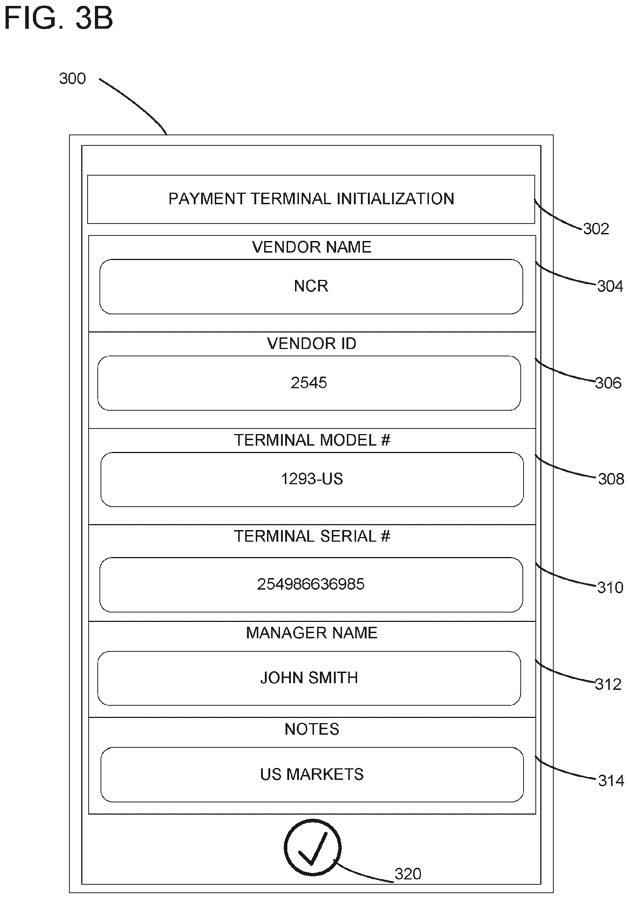

FIG. 3B illustrates a confirmation page from FIG. 3A where a checkmark icon 120 indicates that the request has been received and entered in to the server 104, for example. In one embodiment, the request may trigger the generation of the BDK by the HSM 106. In such an embodiment, upon receiving the request, the server 104 is configured to trigger the generation of the BDK by the HSM 106 and subsequent actions as described above. Moreover, the server 104 may perform audit or verification on the database 114 to ensure proper entries therein. In another embodiment, the request by the administrator or manager of the manufacturer of the payment terminal 102 may be separate from the request initiated by the terminal 102 itself. For example, the terminal 102 may be configured to initiate the request to the API 108 as preconfigured or configured when the terminal 102 is connected to another computer.

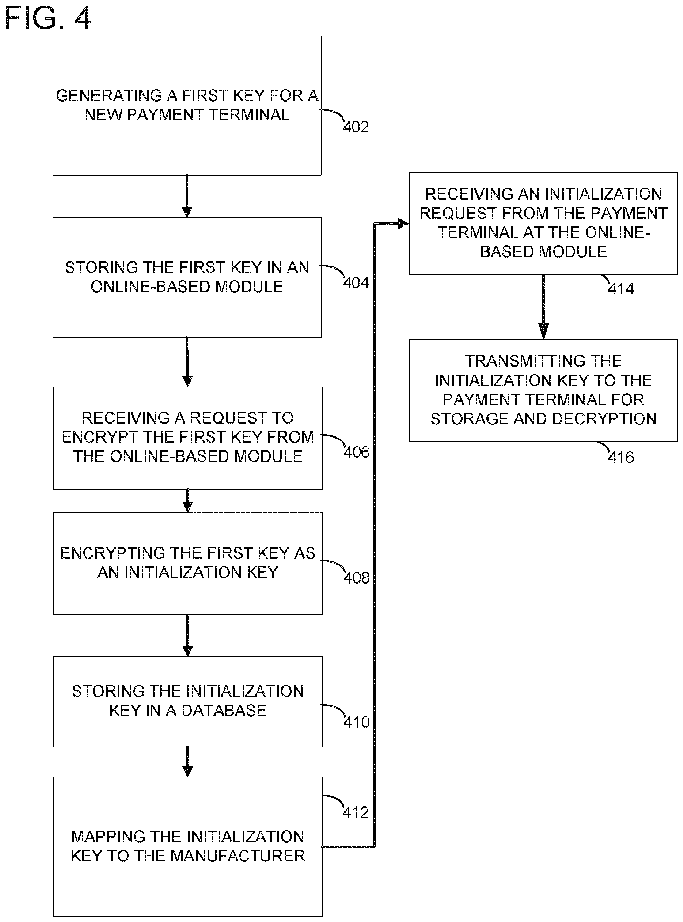

A new terminal needs to be initialized or activated before it can securely process payment transactions. Accordingly, referring now to FIG. 4, a flowchart illustrates a computer-executable method for initializing a payment terminal according to one embodiment of the invention. At 402, a first key for a new payment terminal is generated. At 404, the first key is stored in a remotely accessible module (alternatively referred to herein as an online-based module), which may be accessible via the API 108 in FIG. 1. At 406, a request is received from the online-based module to encrypt the first key. For example, the first key may be an unencrypted BDK and before the payment terminal 102 may receive such first key, it may be encrypted by the server 104.

The first key is encrypted as an initialization key for the payment terminal at 408. At 410, the initialization key is stored in a database accessible by the server. At 412, the initialization key is mapped to the manufacturer. For example, table 200 shown in FIG. 2 may be configured to map the initialization key to the manufacturer. At 414, the terminal may send an initialization request or the API may receive such initialization request for initialization. The initialization request identifies the manufacturer so that, upon receiving the request, at 416, the initialization key corresponding to the manufacturer may be transmitted to the payment terminal for storage and decryption. In one embodiment, the server may provide a decryption kit or SDK to assist the terminal to decrypt the initialization key.

FIG. 5 is a high level illustration of a portable computing device 801 communicating with a remote computing device 841 but the application may be stored and accessed in a variety of ways. In addition, the application may be obtained in a variety of ways such as from an app store, from a web site, from a store Wi-Fi system, etc. There may be various versions of the application to take advantage of the benefits of different computing devices, different languages and different API platforms.

In one embodiment, a portable computing device 801 may be a mobile device 112 that operates using a portable power source 855 such as a battery. The portable computing device 801 may also have a display 802 which may or may not be a touch sensitive display. More specifically, the display 802 may have a capacitance sensor, for example, that may be used to provide input data to the portable computing device 801. In other embodiments, an input pad 804 such as arrows, scroll wheels, keyboards, etc., may be used to provide inputs to the portable computing device 801. In addition, the portable computing device 801 may have a microphone 806 which may accept and store verbal data, a camera 808 to accept images and a speaker 810 to communicate sounds.

The portable computing device 801 may be able to communicate with a computing device 841 or a plurality of computing devices 841 that make up a cloud of computing devices 811. The portable computing device 801 may be able to communicate in a variety of ways. In some embodiments, the communication may be wired such as through an Ethernet cable, a USB cable or RJ6 cable. In other embodiments, the communication may be wireless such as through Wi-Fi^{®} (802.11 standard), BLUETOOTH, cellular communication or near field communication devices. The communication may be direct to the computing device 841 or may be through a communication network 102 such as cellular service, through the Internet, through a private network, through BLUETOOTH, etc. FIG. 5 is a simplified illustration of the physical elements that make up a portable computing device 801 and FIG. 6 is a simplified illustration of the physical elements that make up a server type computing device 841.

FIG. 5 shows a sample portable computing device 801 that is physically configured according to be part of the system. The portable computing device 801 may have a processor 850 that is physically configured according to computer executable instructions. It may have a portable power supply 855 such as a battery which may be rechargeable. It may also have a sound and video module 860 which assists in displaying video and sound and may turn off when not in use to conserve power and battery life. The portable computing device 801 may also have volatile memory 865 and non-volatile memory 870. It may have GPS capabilities 880 that may be a separate circuit or may be part of the processor 850. There also may be an input/output bus 875 that shuttles data to and from the various user input devices such as the microphone 806, the camera 808 and other inputs, such as the input pad 804, the display 802, and the speakers 810, etc. It also may control of communicating with the networks, either through wireless or wired devices. Of course, this is just one embodiment of the portable computing device 801 and the number and types of portable computing devices 801 is limited only by the imagination.

As a result of the system, better information may be provided to a user at a point of sale. The information may be user specific and may be required to be over a threshold of relevance. As a result, users may make better informed decisions. The system is more than just speeding a process but uses a computing system to achieve a better outcome.

The physical elements that make up the remote computing device 841 may be further illustrated in FIG. 6. At a high level, the computing device 841 may include a digital storage such as a magnetic disk, an optical disk, flash storage, non-volatile storage, etc. Structured data may be stored in the digital storage such as in a database. The server 841 may have a processor 1000 that is physically configured according to computer executable instructions. It may also have a sound and video module 1005 which assists in displaying video and sound and may turn off when not in use to conserve power and battery life. The server 841 may also have volatile memory 1010 and non-volatile memory 1015.

The database 1025 may be stored in the memory 1010 or 1015 or may be separate. The database 1025 may also be part of a cloud of computing device 841 and may be stored in a distributed manner across a plurality of computing devices 841. There also may be an input/output bus 1020 that shuttles data to and from the various user input devices such as the microphone 806, the camera 808, the inputs such as the input pad 804, the display 802, and the speakers 810, etc. The input/output bus 1020 also may control of communicating with the networks, either through wireless or wired devices. In some embodiments, the application may be on the local computing device 801 and in other embodiments, the application may be remote 841. Of course, this is just one embodiment of the server 841 and the number and types of portable computing devices 841 is limited only by the imagination.

The user devices, computers and servers described herein may be general purpose computers that may have, among other elements, a microprocessor (such as from the Intel^{®} Corporation, AMD^{®}, ARM^{®}, Qualcomm^{®}, or MediaTek^{®}); volatile and non-volatile memory; one or more mass storage devices (i.e., a hard drive); various user input devices, such as a mouse, a keyboard, or a microphone; and a video display system. The user devices, computers and servers described herein may be running on any one of many operating systems including, but not limited to WINDOWSO, UNIX^{®}, LINUX^{®}, MAC^{®} OS^{®}, iOS^{®}, or Android^{®}. It is contemplated, however, that any suitable operating system may be used for the present invention. The servers may be a cluster of web servers, which may each be LINUX^{®} based and supported by a load balancer that decides which of the cluster of web servers should process a request based upon the current request-load of the available server(s).

The user devices, computers and servers described herein may communicate via networks, including the Internet, wide area network (WAN), local area network (LAN), Wi-Fi^{®}, other computer networks (now known or invented in the future), and/or any combination of the foregoing. It should be understood by those of ordinary skill in the art having the present specification, drawings, and claims before them that networks may connect the various components over any combination of wired and wireless conduits, including copper, fiber optic, microwaves, and other forms of radio frequency, electrical and/or optical communication techniques. It should also be understood that any network may be connected to any other network in a different manner. The interconnections between computers and servers in system are examples. Any device described herein may communicate with any other device via one or more networks.

The example embodiments may include additional devices and networks beyond those shown. Further, the functionality described as being performed by one device may be distributed and performed by two or more devices. Multiple devices may also be combined into a single device, which may perform the functionality of the combined devices.

The various participants and elements described herein may operate one or more computer apparatuses to facilitate the functions described herein. Any of the elements in the above-described Figures, including any servers, user devices, or databases, may use any suitable number of subsystems to facilitate the functions described herein.

Any of the software components or functions described in this application, may be implemented as software code or computer readable instructions that may be executed by at least one processor using any suitable computer language such as, for example, Java, C++, or Perl using, for example, conventional or object-oriented techniques.

The software code may be stored as a series of instructions or commands on a non-transitory computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus and may be present on or within different computational apparatuses within a system or network.

It may be understood that the present invention as described above may be implemented in the form of control logic using computer software in a modular or integrated manner. Based on the disclosure and teachings provided herein, a person of ordinary skill in the art may know and appreciate other ways and/or methods to implement the present invention using hardware, software, or a combination of hardware and software.

The above description is illustrative and is not restrictive. Many variations of embodiments will become apparent to those skilled in the art upon review of the disclosure. The scope embodiments should, therefore, be determined not with reference to the above description, but instead should be determined with reference to the pending claims along with their full scope or equivalents.

One or more features from any embodiment may be combined with one or more features of any other embodiment without departing from the scope embodiments. A recitation of "a", "an" or "the" is intended to mean "one or more" unless specifically indicated to the contrary. Recitation of "and/or" is intended to represent the most inclusive sense of the term unless specifically indicated to the contrary.

One or more of the elements of the present system may be claimed as means for accomplishing a particular function. Where such means-plus-function elements are used to describe certain elements of a claimed system it will be understood by those of ordinary skill in the art having the present specification, figures and claims before them, that the corresponding structure is a general purpose computer, processor, or microprocessor (as the case may be) programmed to perform the particularly recited function using functionality found in any general purpose computer without special programming and/or by implementing one or more algorithms to achieve the recited functionality. As would be understood by those of ordinary skill in the art that algorithm may be expressed within this disclosure as a mathematical formula, a flow chart, a narrative, and/or in any other manner that provides sufficient structure for those of ordinary skill in the art to implement the recited process and its equivalents.

While the present disclosure may be embodied in many different forms, the drawings and discussion are presented with the understanding that the present disclosure is an exemplification of the principles of one or more inventions and is not intended to limit any one embodiments to the embodiments illustrated.

The present disclosure provides a solution to the long-felt need described above. In particular, the systems and methods described herein may be configured for improving initializing new payment terminal devices. Further advantages and modifications of the above described system and method will readily occur to those skilled in the art. The disclosure, in its broader aspects, is therefore not limited to the specific details, representative system and methods, and illustrative examples shown and described above. Various modifications and variations can be made to the above specification without departing from the scope of the appended claims, and it is intended that the present disclosure covers all such modifications and variations provided they come within the scope of the following claims and their equivalents.

## Claims

1. A computer-implemented method (400) for remote key initialization of a payment terminal (102) comprising:
generating (402), by a hardware security module (106), an unencrypted base derivation key for a payment terminal (102);
storing (404), by the hardware security module (106), the unencrypted base derivation key in a remotely accessible module (108);
receiving (406), by a computer server (104), a request to encrypt the unencrypted base derivation key from the remotely accessible module (108);
encrypting (408), by the computer server (104), the unencrypted base derivation key as an encrypted base derivation key;
storing (410), by the computer server (104), the encrypted base derivation key in a database (114);
mapping (412), by the computer server (104), the encrypted base derivation key to a manufacturer;
receiving (414), by the computer server (104), an initialization request (116) from the payment terminal (102) via the remotely accessible module (108), the initialization request (116) identifying the manufacturer; and
in response to the received initialization request (116), transmitting (416), by the computer server (104), the encrypted base derivation key to the payment terminal (102) for storage and decryption.

2. The computer-implemented method (400) of claim 1, wherein the request (116) comprises an application programming call request.

3. The computer-implemented method (400) of claim 1 or claim 2, further comprising providing, by the computer server (104), a decryption kit to the payment terminal (102) for decrypting the encrypted base derivation key.

4. The computer-implemented method (400) of any one of claims 1 to 3, wherein the remotely accessible module (108) is located outside of a firewall (100) of the computer server (104).

5. The computer-implemented method (400) of claim 4, wherein encrypting comprises encrypting, by an encryption module (112) behind the firewall (100) of the computer server (104).

6. The computer-implemented method (400) of any one of claims 1 to 5, further comprising receiving a confirmation, by the computer server (104), that the payment terminal (102) has activated the encrypted base derivation key.

7. A system for remote key injection to a payment terminal (102) for a one-time initialization comprising:
a hardware security module (106) for generating (402) an unencrypted base derivation key for a payment terminal;
a remotely accessible module (108) for storing the unencrypted base derivation key;
a central server (104), coupled to the hardware security module (106) and the remotely accessible module (108), the central server (104) comprising a processor configured to execute computer-executable instructions, which, when executed by the processor, cause the processor to perform the steps of:
receive (406) a request to encrypt the unencrypted base derivation key;
encrypt (408) the unencrypted base derivation key as an encrypted base derivation key;
store (410) the encrypted base derivation key in a database (114);
map (412) the encrypted base derivation key in the database (114) to a manufacturer;
receive (414) an initialization request (116) from the payment terminal (102) via the remotely accessible module (108), the initialization request identifying the manufacturer; and
in response to the received initialization request, transmit (416) the encrypted base derivation key to the payment terminal (102) from the database (114), for storage and decryption in the payment terminal (102).

8. The system of claim 7, wherein the request (116) comprises an application programming call request.

9. The system of claim 7 or 8, wherein the central server (104) is further configured to provide a decryption kit to the payment terminal (102) for decrypting the encrypted base derivation key.

10. The system of any one of claims 7 to 9, wherein the remotely accessible module (108) is located outside of a firewall (100) of the central server (104).

11. The system of claim 10, comprising an encryption module (112) that is behind the firewall (100) of the central server (104), and wherein encrypting comprises encrypting, by the encryption module.

12. The system of any one of claims 7 to 11, wherein the central server (104) is further configured to receive a confirmation, that the payment terminal (102) has activated the encrypted base derivation key.

13. The system of any one of claims 7 to 12, further comprising a user interface portal (122) having a graphical user interface (GUI) for receive a user request from the manufacturer.

14. A non-transitory computer readable medium having stored thereon a set of instructions which, when executed by a processing system, causes the processing system to perform a method (400) according to any one of claims 1 to 6.

## Patentansprüche

1. Computerimplementiertes Verfahren (400) für die Fernschlüsselinitialisierung eines Zahlungsendgeräts (102), umfassend:
Erzeugen (402), durch ein Hardware-Sicherheitsmodul (106), eines unverschlüsselten Basisableitungsschlüssels für ein Zahlungsendgerät (102);
Speichern (404), durch das Hardware-Sicherheitsmodul (106), des unverschlüsselten Basisableitungsschlüssels in einem entfernt zugänglichen Modul (108);
Empfangen (406), durch einen Computerserver (104), einer Anforderung zum Verschlüsseln des unverschlüsselten Basisableitungsschlüssels aus dem entfernt zugänglichen Modul (108);
Verschlüsseln (408), durch den Computerserver (104), des unverschlüsselten Basisableitungsschlüssels als einen verschlüsselten Basisableitungsschlüssel;
Speichern (410), durch den Computerserver (104), des verschlüsselten Basisableitungsschlüssels in einer Datenbank (114);
Abbilden (412), durch den Computerserver (104), des verschlüsselten Basisableitungsschlüssels an einen Hersteller;
Empfangen (414), durch den Computerserver (104), einer Initialisierungsanforderung (116) von dem Zahlungsendgerät (102) über das entfernt zugängliche Modul (108), wobei die Initialisierungsanforderung (116) den Hersteller identifiziert; und
als Reaktion auf die empfangene Initialisierungsanforderung (116), Übertragen (416), durch den Computerserver (104), des verschlüsselten Basisableitungsschlüssels an das Zahlungsendgerät (102) für die Speicherung und Entschlüsselung.

2. Computerimplementiertes Verfahren (400) nach Anspruch 1, wobei die Anforderung (116) eine Anwendungsprogrammierungverbindungsanforderung umfasst.

3. Computerimplementiertes Verfahren (400) nach Anspruch 1 oder 2, ferner umfassend das Bereitstellen, durch den Computerserver (104), eines Entschlüsselungskits an das Zahlungsendgerät (102) zum Entschlüsseln des verschlüsselten Basisableitungsschlüssels.

4. Computerimplementiertes Verfahren (400) nach einem der Ansprüche 1 bis 3, wobei sich das entfernt zugängliche Modul (108) außerhalb einer Firewall (100) des Computerservers (104) befindet.

5. Computerimplementiertes Verfahren (400) nach Anspruch 4, wobei das Verschlüsseln das Verschlüsseln, durch ein Verschlüsselungsmodul (112) hinter der Firewall (100) des Computerservers (104) umfasst.

6. Computerimplementiertes Verfahren (400) nach einem der Ansprüche 1 bis 5, ferner umfassend das Empfangen einer Bestätigung, durch den Computerserver (104), dass das Zahlungsendgerät (102) den verschlüsselten Basisableitungsschlüssel aktiviert hat.

7. System für die Fernschlüsselinjektion an ein Zahlungsendgerät (102) für eine einmalige Initialisierung, umfassend:
ein Hardware-Sicherheitsmodul (106) zum Erzeugen (402) eines unverschlüsselten Basisableitungsschlüssels für ein Zahlungsgerät;
ein entfernt zugängliches Modul (108) zum Speichern des unverschlüsselten Basisableitungsschlüssels;
einen zentralen Server (104), der mit dem Hardware-Sicherheitsmodul (106) und dem entfernt zugänglichen Modul (108) gekoppelt ist, wobei der zentrale Server (104) einen Prozessor umfasst, der dazu konfiguriert ist, computerausführbare Anwiesungen auszuführen, die, wenn sie durch den Prozessor ausgeführt werden, den Prozessor veranlassen, die Schritte durchzuführen:
Empfangen (406) einer Anforderung zum Verschlüsseln des unverschlüsselten Basisableitungsschlüssels;
Verschlüsseln (408) des unverschlüsselten Basisableitungsschlüssels als einen verschlüsselten Basisableitungsschlüssel;
Speichern (410) des verschlüsselten Basisableitungsschlüssels in einer Datenbank (114);
Abbilden (412) des verschlüsselten Basisableitungsschlüssels in der Datenbank (114) an einen Hersteller;
Empfangen (414) einer Initialisierungsanforderung (116) von dem Zahlungsendgerät (102) über das entfernt zugängliche Modul (108), wobei die Initialisierungsanforderung den Hersteller identifiziert; und
als Reaktion auf die empfangene Initialisierungsanforderung, Übertragen (416) des verschlüsselten Basisableitungsschlüssels an das Zahlungsendgerät (102) aus der Datenbank (114) für die Speicherung und Entschlüsselung in dem Zahlungsendgerät (102).

8. System nach Anspruch 7, wobei die Anforderung (116) eine Anwendungsprogrammierungverbindungsanforderung umfasst.

9. System nach Anspruch 7 oder 8, wobei der zentrale Server (104) ferner dazu konfiguriert ist, ein Entschlüsselungskit an das Zahlungsendgerät (102) zum Entschlüsseln des verschlüsselten Basisableitungsschlüssels bereitzustellen.

10. System nach einem der Ansprüche 7 bis 9, wobei sich das entfernt zugängliche Modul (108) außerhalb einer Firewall (100) des zentralen Servers (104) befindet.

11. System nach Anspruch 10, umfassend ein Verschlüsselungsmodul (112), das sich hinter der Firewall (100) des zentralen Servers (104) befindet, und wobei das Verschlüsseln das Verschlüsseln, durch das Verschlüsselungsmodul, umfasst.

12. System nach einem der Ansprüche 7 bis 11, wobei der zentrale Server (104) ferner dazu konfiguriert ist, eine Bestätigung zu empfangen, dass das Zahlungsendgerät (102) den verschlüsselten Basisableitungsschlüssel aktiviert hat.

13. System nach einem der Ansprüche 7 bis 12, ferner umfassend ein Benutzeroberflächenportal (122) mit einer grafischen Benutzeroberfläche (GUI) zum Empfangen einer Benutzeranforderung von dem Hersteller.

14. Nichtflüchtiges, computerlesbares Medium, mit einem darauf gespeicherten Satz von Anweisungen, die, wenn sie von einem Verarbeitungssystem ausgeführt werden, das Verarbeitungssystem veranlassen, ein Verfahren (400) nach einem der Ansprüche 1 bis 6 durchzuführen.

## Revendications

1. Procédé mis en oeuvre par ordinateur (400) pour une initialisation de clé distante d'un terminal de paiement (102) comprenant :
la génération (402), par un module de sécurité matériel (106), d'une clé de dérivation de base non chiffrée pour un terminal de paiement (102) ;
le stockage (404), par le module de sécurité matériel (106), de la clé de dérivation de base non chiffrée dans un module accessible à distance (108) ;
la réception (406), par un serveur informatique (104), d'une demande pour chiffrer la clé de dérivation de base non chiffrée du module accessible à distance (108) ;
le chiffrement (408), par le serveur informatique (104), de la clé de dérivation de base non chiffrée en tant que clé de dérivation de base chiffrée ;
le stockage (410), par le serveur informatique (104), de la clé de dérivation de base chiffrée dans une base de données (114) ;
le mappage (412), par le serveur informatique (104), de la clé de dérivation de base chiffrée à un fabricant ;
la réception (414), par le serveur informatique (104), d'une demande d'initialisation (116) provenant du terminal de paiement (102) par l'intermédiaire du module accessible à distance (108), la demande d'initialisation (116) identifiant le fabricant ; et
en réponse à la demande d'initialisation reçue (116), la transmission (416), par le serveur informatique (104), de la clé de dérivation de base chiffrée au terminal de paiement (102) pour le stockage et le déchiffrement.

2. Procédé mis en oeuvre par ordinateur (400) selon la revendication 1, dans lequel la demande (116) comprend une demande d'appel de programmation d'application.

3. Procédé mis en oeuvre par ordinateur (400) selon la revendication 1 ou la revendication 2, comprenant en outre la fourniture, par le serveur informatique (104), d'un kit de déchiffrement au terminal de paiement (102) pour déchiffrer la clé de dérivation de base chiffrée.

4. Procédé mis en oeuvre par ordinateur (400) selon l'une quelconque des revendications 1 à 3, dans lequel le module accessible à distance (108) est situé à l'extérieur d'un pare-feu (100) du serveur informatique (104).

5. Procédé mis en oeuvre par ordinateur (400) selon la revendication 4, dans lequel le chiffrement comprend le chiffrement, par un module de chiffrement (112) derrière le pare-feu (100) du serveur informatique (104).

6. Procédé mis en oeuvre par ordinateur (400) selon l'une quelconque des revendications 1 à 5, comprenant en outre la réception d'une confirmation, par le serveur informatique (104), que le terminal de paiement (102) a activé la clé de dérivation de base chiffrée.

7. Système d'injection de clé distante à un terminal de paiement (102) pour une initialisation à usage unique comprenant :
un module de sécurité matériel (106) pour générer (402) une clé de dérivation de base non chiffrée pour un terminal de paiement ;
un module accessible à distance (108) pour stocker la clé de dérivation de base non chiffrée ;
un serveur central (104), couplé au module de sécurité matériel (106) et au module accessible à distance (108), le serveur central (104) comprenant un processeur configuré pour exécuter des instructions exécutables par ordinateur, qui, lorsqu'elles sont exécutées par le processeur, amènent le processeur à effectuer les étapes consistant à :
recevoir (406) une demande pour chiffrer la clé de dérivation de base non chiffrée ;
chiffrer (408) la clé de dérivation de base non chiffrée en tant que clé de dérivation de base chiffrée ;
stocker (410) la clé de dérivation de base chiffrée dans une base de données (114) ;
mapper (412) la clé de dérivation de base chiffrée dans la base de données (114) à un fabricant ;
recevoir (414) une demande d'initialisation (116) provenant du terminal de paiement (102) par l'intermédiaire du module accessible à distance (108), la demande d'initialisation identifiant le fabriquant ; et
en réponse à la demande d'initialisation reçue, transmettre (416) la clé de dérivation de base chiffrée au terminal de paiement (102) à partir de la base de données (114), pour stockage et déchiffrement dans le terminal de paiement (102).

8. Système selon la revendication 7, dans lequel la demande (116) comprend une demande d'appel de programmation d'application.

9. Système selon la revendication 7 ou 8, dans lequel le serveur central (104) est en outre configuré pour fournir un kit de déchiffrement au terminal de paiement (102) pour déchiffrer la clé de dérivation de base chiffrée.

10. Système selon l'une quelconque des revendications 7 à 9, dans lequel le module accessible à distance (108) est situé à l'extérieur d'un pare-feu (100) du serveur central (104).

11. Système selon la revendication 10, comprenant un module de chiffrement (112) qui est derrière le pare-feu (100) du serveur central (104), et dans lequel le chiffrement comprend le chiffrement, par le module de chiffrement.

12. Système selon l'une quelconque des revendications 7 à 11, dans lequel le serveur central (104) est en outre configuré pour recevoir une confirmation que le terminal de paiement (102) a activé la clé de dérivation de base chiffrée.

13. Système selon l'une quelconque des revendications 7 à 12, comprenant en outre un portail d'interface utilisateur (122) ayant une interface utilisateur graphique (GUI) pour recevoir une demande d'utilisateur du fabricant.

14. Support lisible par ordinateur non transitoire sur lequel est stocké un ensemble d'instructions qui, lorsqu'elles sont exécutées par un système de traitement, amènent le système de traitement à effectuer un procédé (400) selon l'une quelconque des revendications 1 à 6.
